# EUROPEAN PATENT APPLICATION

(11) **EP 4 053 715 A2**
(43) Date of publication of application: **07.09.2022**
(21) Application number: 22184240.4
(22) Date of filing: 12.07.2022
(51) Int. Cl.: G06F 16/903

(54) **METHOD AND APPARATUS FOR SEARCHING INSTANT MESSAGING OBJECT, ELECTRONIC DEVICE AND STORAGE MEDIUM**

(30) Priority: 15.07.2021 CN 202110801928
(71) Applicant: BEIJING BAIDU NETCOM SCIENCE TECHNOLOGY CO., LTD., No. 10 Shangdi 10th Street Haidian District Beijing 100085 (CN)
(72) Inventor: PAN, Qiutong, Beijing, 100085 (CN); LI, Ruigao, Beijing, 100085 (CN); LI, Yanan, Beijing, 100085 (CN); HE, Bolei, Beijing, 100085 (CN)
(74) Representative: Maiwald Patent- und Rechtsanwaltsgesellschaft mbH

(57) **Abstract**

The disclosure provides a method and apparatus for searching an instant messaging object and a storage medium, and relates to the field of artificial intelligence technologies. The method includes: receiving a search request of a first object, and determining a type of the search request (101); obtaining at least one recall set of the first object based on a client-side search engine in an instant messaging system in response to the type of the search request being a first type (102); obtaining at least one candidate object corresponding to a search keyword in the search request based on the search keyword and the at least one recall set (103); obtaining feature information of each candidate object (104); and responding to the search request by sorting the at least one candidate object based on the feature information (105).

## Description

### FIELD

The disclosure relates to the field of artificial intelligence technologies, especially to the field of deep learning, the field of cloud computing, and the field of intelligent search, in particular to a method and an apparatus for searching an instant messaging object, an electronic device and a storage medium.

### BACKGROUND

In the era of knowledge economy, the most important factors of production in modern enterprises are people and information, which together build the core competitiveness of enterprises. In order to better promote the flow of information and coordinate personnel organization, modern enterprises often use enterprise IM (instant messaging) software to meet such needs.

### SUMMARY

The disclosure provides a method and apparatus for searching an instant messaging object, an electronic device and a storage medium, and can be used in search scenarios in instant messaging software.

According to a first aspect of the disclosure, a method for searching an instant messaging object is provided. The method includes:
receiving a search request of a first object, and determining a type of the search request;
obtaining at least one recall set of the first object based on a client-side search engine in an instant messaging system in response to the type of the search request being a first type;
obtaining at least one candidate object corresponding to a search keyword in the search request based on the search keyword and the at least one recall set;
obtaining feature information of each candidate object; and
responding to the search request by sorting the at least one candidate object based on the feature information.

According to a second aspect of the disclosure, an apparatus for searching an instant messaging object is provided. The apparatus includes:
a receiving module, configured to receive a search request of a first object;
a first determining module, configured to determine a type of the search request;
a first obtaining module, configured to obtain at least one recall set of the first object based on a client-side search engine in an instant messaging system in response to the type of the search request being a first type;
a second obtaining module, configured to obtain at least one candidate object corresponding to a search keyword in the search request based on the search keyword and the at least one recall set;
a third obtaining module, configured to obtain feature information of each candidate object; and
a responding module, configured to respond to the search request by sorting the at least one candidate object based on the feature information.

According to a third aspect of the disclosure, an electronic device is provided. The electronic device includes:
at least one processor; and
a memory communicatively coupled to the at least one processor.

The memory stores instructions executable by the at least one processor, when the instructions are executed by the at least one processor, the at least one processor is enabled to implement the method according to the first aspect of the disclosure.

According to a fourth aspect of the disclosure, a non-transitory computer-readable storage medium storing computer instructions is provided. The computer instructions are configured to cause a computer to implement the method according to the first aspect of the disclosure.

According to a fifth aspect of the disclosure, a computer program product is provided. The computer program product includes computer instructions. When the instructions are executed by a processor, the method according to the first aspect of the disclosure is implemented.

With the technical solution of the disclosure, the problems of poor recall and slowing down the performance caused by a large recall set from the server side can be effectively avoided, thereby reducing the time consumed by the response and improving the system performance. In addition, the present disclosure can improve the accuracy of search results by sorting each candidate object according to the feature information of the candidate objects, help users to quickly find their search targets, and improve users' search and office efficiency.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flow chart of a method for searching an instant messaging object according to an embodiment of the disclosure;
FIG. 2 is a flow chart of a method for searching an instant messaging object according to an embodiment of the disclosure;
FIG. 3 is a flow chart of a method for searching an instant messaging object according to an embodiment of the disclosure;
FIG. 4 is a flow chart of a method for searching an instant messaging object according to an embodiment of the disclosure;
FIG. 5 is a block diagram illustrating an apparatus for searching an instant messaging object according to an embodiment of the disclosure;
FIG. 6 is a block diagram illustrating an apparatus for searching an instant messaging object according to an embodiment of the disclosure;
FIG. 7 is a block diagram illustrating an apparatus for searching an instant messaging object according to an embodiment of the disclosure;
FIG. 8 is a schematic diagram illustrating an electronic device for implementing a method for searching an instant messaging object according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein. For clarity and conciseness, descriptions of well-known functions and structures are omitted in the following description.

It should be noted that, in the technical solution of the disclosure, the acquisition, storage and application of the user's personal information involved all comply with the provisions of relevant laws and regulations, and do not violate public order and good customs. In addition, the user's personal information involved in this disclosure is acquired, stored and applied with the user's knowledge and consent.

In the era of knowledge economy, the most important factors of production in modern enterprises are people and information, which together build the core competitiveness of enterprises. In order to better promote the flow of information and coordinate personnel organization, modern enterprises often use enterprise IM (instant messaging) software to meet such needs. These tools are integrated with search engine capabilities, which can retrieve contacts, groups, documents, message records, etc., greatly improving users' search and office efficiency. In the related art, the search solutions of enterprise IM are often as follows: the retrieval capability is realized through a remote invocation method of the server; the recall set uses the complete set in the enterprise; the sorting strategy only refers to the correlation with the query.

However, the solutions in related art often have the following problems. The performance of the server is poor, and the response time is often long, such as between 100ms and 500ms. The recall set is large, which causes that some recalls are poor, and the large recall set further slows down the performance at the same time. The sorting strategy refers to the correlation only, which causes users to waste more time to find their search targets, and reduces the user's search and office efficiency.

For this, the disclosure provides a method and an apparatus for searching an instant messaging object, an electronic device and a storage medium. A method and an apparatus for searching an instant messaging object, an electronic device and a storage medium according to the embodiments of the disclosure are described below with reference to the accompanying drawings.

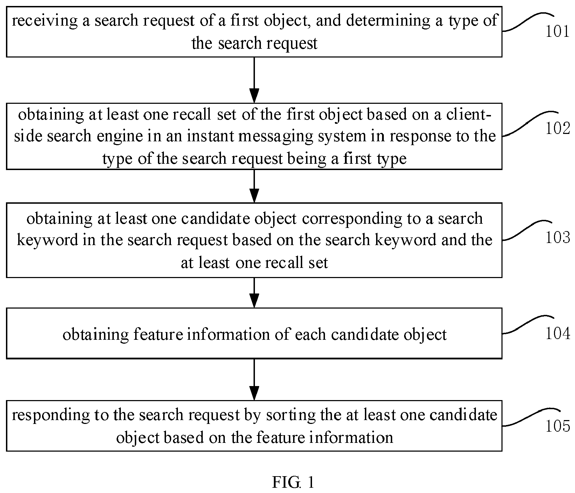

FIG. 1 is a flow chart of a method for searching an instant messaging object according to an embodiment of the disclosure. It should be noted that the method for searching an instant messaging object in the embodiments of the present disclosure may be performed by an apparatus for searching an instant messaging object. The apparatus may be implemented in software and/or hardware, and may be integrated into electronic devices such as servers or user terminals.

As illustrated in FIG. 1, the method for searching an instant messaging object may include following steps 101 to 105.

At step 101, a search request of a first object is received, and a type of the search request is determined.

The first object involved in the embodiments of the disclosure may be understood as a user who uses instant messaging software.

In the embodiment of the disclosure, the search request refers to a request, made by the user, for searching an object in instant messaging software. The user can input a text content as a search keyword to perform object search. The search keyword may be a name of the object. It should be noted that the object search refers to searching for a contact or a group, or may also refer to searching for contents such as a document and a message record, which is not specifically limited here.

It should be noted that different search contents correspond to different types of search requests. For example, the search request types may be classified into a first type and a second type. The first type can be understood as a type of using a client-side search engine to respond to the search request; the second type can be understood as a type of using a server-side search engine to respond to the search request. For example, searching for content commonly used and often searched by the user, such as searching for contacts, search groups, etc., can be considered as the first type of search request. That is, the client-side search engine can be responsible for providing retrieval ability for the content commonly used and often searched by the user. For another example, searching for content not commonly used or not often searched by the user, such as searching a service account, an official account, etc., can be considered as the second type of search request. That is, the server-side search engine can be responsible for providing retrieval ability for the content that the user does not commonly use or often searched.

At step 102, at least one recall set of the first object is obtained based on a client-side search engine in an instant messaging system in response to the type of the search request being a first type.

Optionally, when the type of the search request is the first type, for example, for commonly used or frequently searched content such as contacts or groups initiated by the first object, retrieval ability may be provided by the client-side search engine in the instant messaging system. At this time, the client-side search engine can obtain the at least one recall set of the first object, so as to search within that at least one recall set based on a search keyword in the search request.

In some embodiments of the present disclosure, sources of the at least one recall set may include, but are not limited to, at least one of: objects clicked by the first object in a first time period; a preset number of objects communicating with the first object in a second time period; and, close objects (such as close friends) of the first object in a third time period.

It is should be noted that, when collecting and analyzing the search and click logs of enterprise-level IM users, it is found that, on average, more than 87% of objects of the user's searches and clicks made in the past 1 year (from one minute before a current minute to one year before the currently minute) were objects that the user has communicated and contacted with. That is, there are stable working relationships between users, and the user also tends to search for contacts or groups in these stable relationships. Therefore, the source of the recall sets of the client-side search engine can be composed as follows: the objects that the user clicks recently (for example, the upper limit of time can be within 1 month); the last 300 communication objects of the user (for example, the upper limit of time can be within 1 year); close objects (for example, the upper limit of time can be within 1 year) issued by a server. Thus, the recall candidate set provided by the client-side search engine is relatively small, which can reduce the response time and improve the system performance.

Optionally, the above-mentioned close objects may be determined by the client-side search engine, or may also be determined by the server. For example, the server may determine the close objects of the first object, and send the close objects to the client at regular time intervals. Optionally, the server can use each object as a node, and establish a relational graph model based on relational data of each object. The server calculates a similarity between each object node in the relational graph model and a target object node. The target object node is a first-hop object node of the corresponding object node. The target object node whose similarity is greater than a preset threshold is determined as the close object of the corresponding object node. The relational data may include, but is not limited to, communication data, email data, meeting invitation data, reporting relationship and other information.

For example, the objects are users who use the enterprise IM software, the relational graph model can be established through the users' communication data, email data, meeting invitation data, reporting relationship and other information. Each user can be mapped to a vector through the Node2Vec technology. By calculating the similarity between each user (node) and its first-hop user (node), the first-hop user (node) having a similarity greater than a certain threshold is called a close object of the corresponding user (node). The first-hop user of a user refers to a user who has direct communication data, email data, meeting invitation data, reporting relationship, etc. with the user. For example, A sends an email to both B and C, and C sends an email to D, then B and C are first-hop users of A, D is a second-hop user of A (the two people A and D may not know each other).

At step 103, at least one candidate object corresponding to a search keyword in the search request is obtained based on the search keyword and the at least one recall set.

In an implementation, the search keyword in the search request is used to search in the recall set to obtain the at least one candidate object corresponding to the search keyword.

At step 104, feature information of each candidate object is obtained.

In some embodiments of the disclosure, the feature information may include, but is not limited to, at least one or more of the following: the search keyword (also called a query), a match field, a match field score, a match field content, a match field index, time of the last interaction, a count of messages today; a count of messages this week; counts of messages in the last 10, 30, and 90 days, counts of communication days in the last 10, 30, and 90 days, an intimacy score, whether clicked by the user recently, user portrait, and an intersection map between search keywords and match contents in the last 50 click behaviors of the user. The field represents a content block of a searched object. For example, the field of the contact contains a remark, a nickname, and a department, and so on.

The match field refers to a field of an object that matches the search keyword when an object search is performed in the recall set using the search keyword. The match field score refers to a score of the field of the object that matches the search keyword when the object search is performed in the recall set using the search keyword. The match field content refers to the specific content of the field of the object that matches the search keyword when the object search is performed in the recall set using the search keyword. The match field index refers to an index value of the field of the object that matches the search keyword when the object search is performed in the recall set using the search keyword.

At step 105, the at least one candidate object is sorted based on the feature information to respond to the search request.

Optionally, the at least one candidate object is sorted based on the feature information of each candidate object, and the at least one candidate object are displayed according to the sorting result to respond to the search request. For example, the candidate objects in the top N positions may be displayed for responding to the search request, where N may be 1 or 3, and the value of N may be determined according to the actual situation, which is not specifically limited in the disclosure.

It should be noted that in the disclosure, C++ can be used to implement the entire solution of the client-side search engine, and the client-side search engine, as an SDK (software development kit), can be integrated into various clients to provide users with search capabilities. The features and data required by the client-side search engine are sent from an online server to the client side through the interface service once every period of time (such as 1 hour).

With the method for searching an instant messaging object according to the embodiments of the disclosure, when it is determined that the search request for the first object is of the first type, a retrieval function can be provided based on the client-side search engine, and the client-side search engine itself provides the recall set, which can effectively avoid the problems of poor recall and slowing down the performance caused by a large recall set from the server side, thereby reducing the time consumed by the response and improving the system performance. In addition, the present disclosure can improve the accuracy of search results by sorting each candidate object according to the feature information of the candidate objects, help users to quickly find their search targets, and improve users' search and office efficiency.

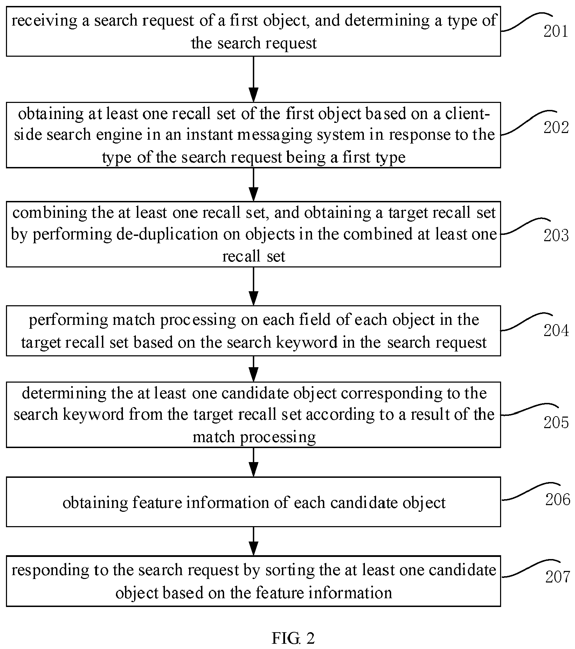

In order to further reduce the response time and improve the accuracy of the search results. In some embodiments of the disclosure, the at least one recall set provided by the client-side search engine may be combined and de-duplicated, and then preliminary match processing and filtration may be performed on each field in the combined recall set, so that the remaining candidate set can enter the sorting stage. Optionally, as illustrated in in FIG. 2, the method for searching for an instant messaging object may include, but is not limited to, the following steps.

At step 201, a search request of a first object is received, and a type of the search request is determined.

In some embodiments of the disclosure, step 201 may be implemented by any one of the embodiments of the disclosure, which is not limited in the embodiments of the disclosure, and will not be repeated here. For example, step 201 may implemented with reference to the implementation of step 101.

At step 202, at least one recall set of the first object is obtained based on a client-side search engine in an instant messaging system in response to the type of the search request being a first type.

In some embodiments of the disclosure, step 202 may be implemented by any one of the embodiments of the disclosure, which is not limited in the embodiments of the disclosure, and will not be repeated here. For example, step 202 may implemented with reference to the implementation of step 102.

At step 203, the at least one recall set are combined, and a target recall set is obtained by performing de-duplication on objects in the combined at least one recall set.

It can be understood that, the repeated or duplicated candidate objects may exist in the at least one recall set provided by the client-side search engine. In order to further reduce the consumed response time, the recall sets can be combined, and the repeated objects in the combined recall set can be de-duplicated to obtain a recall set, which can be called a target recall set.

At step 204, match processing is performed on each field of each object in the target recall set based on the search keyword in the search request.

Optionally, the search keyword in the search request is used to perform searching on each field of each object in the target recall set. For example, according to the search keyword in the search request, the match processing may be performed on each field of each object in the target recall set based on multiple different match levels. Scores are different for different match levels.

For example, match levels such as precise search, pinyin search, fuzzy search, and initial search can be used to perform the match and filtration processing on each field of each object in the target recall set according to the search keywords. For example:
Query=Zhang (corresponding to " 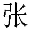 " in Chinese), field (Staff_name)=Zhang san (corresponding to " 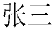 " in Chinese), Result=match (precise match)
Query=Zhang (corresponding to " 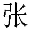 " in Chinese), field (Staff_name)=Li si (corresponding to " 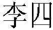 " in Chinese), Result=filtered (not match)
Query=zhang (corresponding to pinyin of " 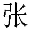 " in Chinese), field (Staff_name)= Zhang san (corresponding to " 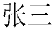 " in Chinese), Result= match (pinyin match)
Query= Zhang (corresponding to " 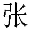 " in Chinese), field (Staff_name)=Liu zhang (corresponding to " 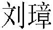 " in Chinese), Result= match (fuzzy match)
Query=zs, field (Staff_name)= Zhang san (corresponding to " 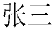 " in Chinese), Result= match (initial match).

At step 205, the at least one candidate object corresponding to the search keyword is determined from the target recall set according to a result of the match processing.

Optionally, a matched candidate object in the target recall set is determined as a candidate object corresponding to the search keyword according to the result of the match processing.

At step 206, feature information of each candidate object is obtained.

In some embodiments of the disclosure, step 206 may be implemented by any one of the embodiments of the disclosure, which is not limited in the embodiments of the disclosure, and will not be repeated here. For example, step 206 may implemented with reference to the implementation of step 104.

At step 207, the at least one candidate object is sorted based on the feature information to respond to the search request.

In some embodiments of the disclosure, step 207 may be implemented by any one of the embodiments of the disclosure, which is not limited in the embodiments of the disclosure, and will not be repeated here. For example, step 207 may implemented with reference to the implementation of step 105.

With the method for searching an instant messaging object according to the embodiments of the disclosure, the at least one recall set provided by the client-side search engine can be combined and de-duplicated, and then the preliminary match and filtration processing can be performed on each candidate filed, so that the remaining recall sets enter the sorting stage. That is, the candidate objects are sorted after performing the combining and de-duplication, which can further reduce the response time and improve the accuracy of the search results.

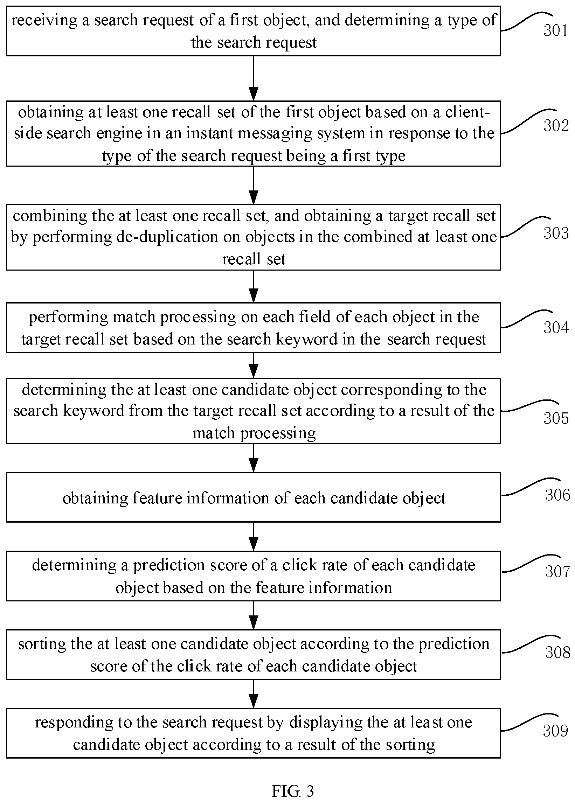

In order to further improve the sorting effect and improve the accuracy of search results. In some embodiments of the disclosure, a prediction score of a click rate of each candidate object may be determined according to the feature information, and the at least one candidate object may be sorted according to the prediction score of the click rate of each candidate object. Optionally, as illustrated in FIG. 3, the method for searching an instant messaging object may include, but is not limited to, the following steps.

At step 301, a search request of a first object is received, and a type of the search request is determined.

In some embodiments of the disclosure, step 301 may be implemented by any one of the embodiments of the disclosure, which is not limited in the embodiments of the disclosure, and will not be repeated here. For example, step 301 may implemented with reference to the implementation of step 101.

At step 302, at least one recall set of the first object is obtained based on a client-side search engine in an instant messaging system in response to the type of the search request being a first type.

In some embodiments of the disclosure, step 302 may be implemented by any one of the embodiments of the disclosure, which is not limited in the embodiments of the disclosure, and will not be repeated here. For example, step 302 may implemented with reference to the implementation of step 102.

At step 303, the at least one recall set are combined, and a target recall set is obtained by performing de-duplication on objects in the combined at least one recall set.

In some embodiments of the disclosure, step 303 may be implemented by any one of the embodiments of the disclosure, which is not limited in the embodiments of the disclosure, and will not be repeated here. For example, step 303 may implemented with reference to the implementation of step 203.

At step 304, match processing is performed on each field of each object in the target recall set based on the search keyword in the search request.

In some embodiments of the disclosure, step 304 may be implemented by any one of the embodiments of the disclosure, which is not limited in the embodiments of the disclosure, and will not be repeated here. For example, step 304 may implemented with reference to the implementation of step 204.

At step 305, the at least one candidate object corresponding to the search keyword is determined from the target recall set according to a result of the match processing.

In some embodiments of the disclosure, step 305 may be implemented by any one of the embodiments of the disclosure, which is not limited in the embodiments of the disclosure, and will not be repeated here. For example, step 305 may implemented with reference to the implementation of step 205.

At step 306, feature information of each candidate object is obtained.

In some embodiments of the disclosure, step 306 may be implemented by any one of the embodiments of the disclosure, which is not limited in the embodiments of the disclosure, and will not be repeated here. For example, step 306 may implemented with reference to the implementation of step 104.

At step 307, a prediction score of a click rate of each candidate object is determined based on the feature information.

In one implementation, a pre-trained deep neural network model can be used to perform prediction on the feature information of each candidate object, to obtain the prediction score of the click rate of each candidate object. The click rate refers to a proportion of objects clicked by the user sorting at the top 1 position.

Optionally, the deep neural network model can be a framework blending a wide model and a deep model for joint training, which comprehensively utilizes the memory ability of the wide model and the generalization ability of the deep model, to balance the accuracy and scalability of the system through a single model. The training data used in training the deep neural network model can be the user's historical search and click data, where clicking is a positive example, and not clicking is a negative example. Some features used by the model are as follows:

| feature_name | explanation |
|---|---|
| query | a query |
| match_field | a match field |
| match score | a match field score |
| match_string | a match field content |
| match_index | a match field index |
| last interactive time | time of the last interaction |
| interactive_count_day | a count of messages today |
| interactive count week | a count of messages this week |
| interactive_count_^{∗} | counts of messages in the last 10, 30, and 90 days |
| interactive_day_^{∗} | counts of communication days in the last 10, 30, and 90 days |
| model_score | an intimacy score |
| recent choice type | whether clicked by the user recently |
| user_portrait | user portrait |
| user_search_habits | an intersection map between the queries and match contents in the last 50 click behaviors of the user |

In order not to affect the performance of the client (because the content available and the CPU of the central processing unit in the client are limited), the deep neural network model is distilled into a 3-layer DNN (deep neural network) model by using a model distillation scheme, so that the calculation parameters can be reduced from tens of millions to thousands, thus the CPU and memory usage in the client may not be significantly improved, and the client may not be significantly slowed down or stuck.

The model distillation is to transfer the knowledge learned by a large model or multiple models as a whole to another lightweight single model, which is convenient for deployment. In short, a new small model is used to learn the prediction results of the large model. It can be seen that the model has strong robustness, and can give personalized optimal results by learning user search habits. In addition, the model learns the proportion of the user's clicked objects in the top1 position, thus the user's top1 click rate can be significantly improved.

At step 308, the at least one candidate object is sorted according to the prediction score of the click rate of each candidate object.

Optionally, the at least one candidate object is sorted in a descending order according to the prediction score of the click rate of each candidate object.

At step 309, the at least one candidate object is displayed according to a result of the sorting to respond to the search request.

In some embodiments of the disclosure, step 309 may be implemented by any one of the embodiments of the disclosure, which is not limited in the embodiments of the disclosure, and will not be repeated here. For example, step 309 may implemented with reference to the implementation of step 105.

With the method for searching an instant messaging object according to the embodiments of the disclosure, the prediction score of the click rate of each candidate object can be determined according to the feature information, and the at least one candidate object can be sorted according to the prediction score of the click rate of each candidate object, which can further improve the sorting effect. In addition, the candidate objects are displayed to the user according to the sorting result, which can further improve the accuracy of the search result.

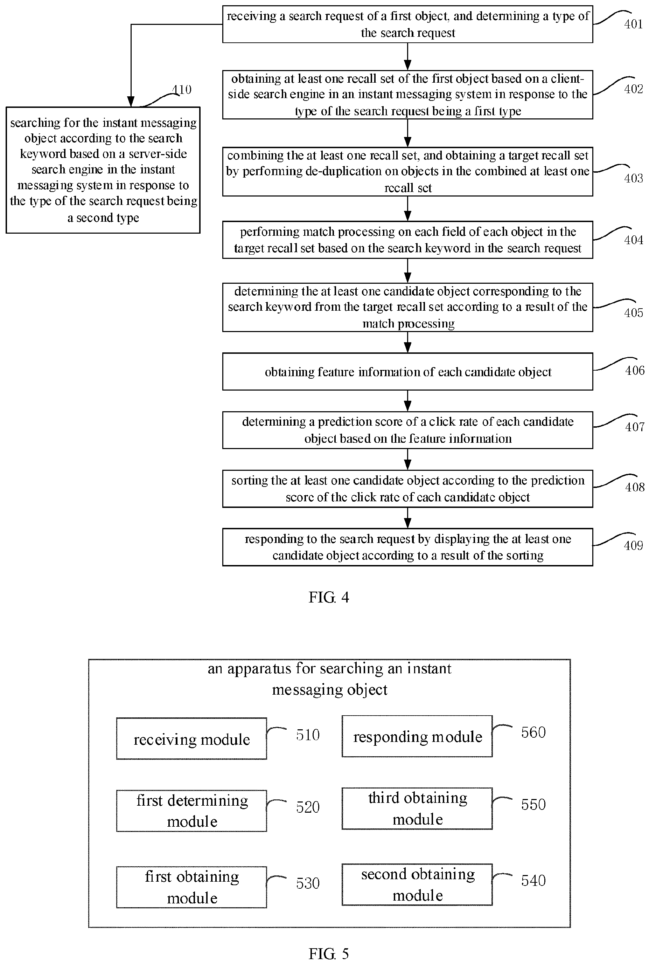

In order to be applicable to different search scenarios, in some embodiments of the disclosure, when it is determined that the search request is of the second type, an instant messaging object search may be performed according to the search keyword based on a server-side search engine. Optionally, as illustrated in FIG. 4, the method for searching an instant messaging object may include, but is not limited to, the following steps.

At step 401, a search request of a first object is received, and a type of the search request is determined.

In some embodiments of the disclosure, step 401 may be implemented by any one of the embodiments of the disclosure, which is not limited in the embodiments of the disclosure, and will not be repeated here. For example, step 401 may implemented with reference to the implementation of step 101.

At step 402, at least one recall set of the first object is obtained based on a client-side search engine in an instant messaging system in response to the type of the search request being a first type.

In some embodiments of the disclosure, step 402 may be implemented by any one of the embodiments of the disclosure, which is not limited in the embodiments of the disclosure, and will not be repeated here. For example, step 402 may implemented with reference to the implementation of step 102.

At step 403, the at least one recall set are combined, and a target recall set is obtained by performing de-duplication on objects in the combined at least one recall set.

In some embodiments of the disclosure, step 403 may be implemented by any one of the embodiments of the disclosure, which is not limited in the embodiments of the disclosure, and will not be repeated here. For example, step 403 may implemented with reference to the implementation of step 203.

At step 404, match processing is performed on each field of each object in the target recall set based on the search keyword in the search request.

In some embodiments of the disclosure, step 404 may be implemented by any one of the embodiments of the disclosure, which is not limited in the embodiments of the disclosure, and will not be repeated here. For example, step 404 may implemented with reference to the implementation of step 204.

At step 405, the at least one candidate object corresponding to the search keyword is determined from the target recall set according to a result of the match processing.

In some embodiments of the disclosure, step 405 may be implemented by any one of the embodiments of the disclosure, which is not limited in the embodiments of the disclosure, and will not be repeated here. For example, step 405 may implemented with reference to the implementation of step 205.

At step 406, feature information of each candidate object is obtained.

In some embodiments of the disclosure, step 406 may be implemented by any one of the embodiments of the disclosure, which is not limited in the embodiments of the disclosure, and will not be repeated here. For example, step 406 may implemented with reference to the implementation of step 104.

At step 407, a prediction score of a click rate of each candidate object is determined based on the feature information.

In some embodiments of the disclosure, step 407 may be implemented by any one of the embodiments of the disclosure, which is not limited in the embodiments of the disclosure, and will not be repeated here. For example, step 407 may implemented with reference to the implementation of step 307.

At step 408, the at least one candidate object is sorted according to the prediction score of the click rate of each candidate object.

In some embodiments of the disclosure, step 408 may be implemented by any one of the embodiments of the disclosure, which is not limited in the embodiments of the disclosure, and will not be repeated here. For example, step 408 may implemented with reference to the implementation of step 308.

At step 409, the at least one candidate object is displayed according to a result of the sorting to respond to the search request.

In some embodiments of the disclosure, step 409 may be implemented by any one of the embodiments of the disclosure, which is not limited in the embodiments of the disclosure, and will not be repeated here. For example, step 309 may implemented with reference to the implementation of step 105.

At step 410, searching for the instant messaging object is performed according to the search keyword based on a server-side search engine in the instant messaging system in response to the type of the search request being a second type.

Optionally, when the type of the search request is the second type, an instant messaging object search is performed according to the search keyword based on the server-side search engine. That is to say, the server-side search engine can provide retrieval capabilities for the content that the user does not use or find frequently.

With the method for searching an instant messaging object in the embodiments of the disclosure, when the type of the search request is the first type, the client-side search engine provides the retrieval capabilities, and when the type of the search request is the second type, the server-side search engine provide the retrieval capabilities, thus the method can be suitable for different search scenarios.

In the technical solution of the present disclosure, the acquisition, storage and application of the user's personal information involved are in compliance with the relevant laws and regulations, and do not violate public order and good customs.

To implement the above embodiments, the disclosure further provides an apparatus for searching an instant messaging object.

FIG. 5 is a block diagram illustrating an apparatus for searching an instant messaging object according to an embodiment of the disclosure. As illustrated in FIG. 5, the apparatus for searching an instant messaging object may include a receiving module 510, a first determining module 520, a first obtaining module 530, a second obtaining module 540, a third obtaining module 550, and a responding module 560.

The receiving module 510 is configured to receive a search request of a first object.

The first determining module 520 is configured to determine a type of the search request.

The first obtaining module 530 is configured to obtain at least one recall set of the first object based on a client-side search engine in an instant messaging system in response to the type of the search request being a first type. A source of the recall set includes at least one of: an object clicked by the first object in a first time period; a preset number of objects communicating with the first object in a second time period; and a close object of the first object in a third time period.

The second obtaining module 540 is configured to obtain at least one candidate object corresponding to a search keyword in the search request based on the search keyword and the at least one recall set. For example, the second obtaining module 540 is configured to: combine the at least one recall set, and obtain a target recall set by performing de-duplication on objects in the combined at least one recall set; perform match processing on each field of each object in the target recall set based on the search keyword in the search request; and determine the at least one candidate object corresponding to the search keyword from the target recall set according to a result of the match processing.

In an implementation, the second obtaining module 540 is configured to perform the match processing on each field of each object in the target recall set based on a plurality of match levels according to the search keyword in the search request.

The third obtaining module 550 is configured to obtain feature information of each candidate object

The responding module 560 is configured to respond to the search request by sorting the at least one candidate object based on the feature information. For example, the responding module 560 is configured to: determine a prediction score of a click rate of each candidate object based on the feature information; sort the at least one candidate object according to the prediction score of the click rate of each candidate object; and respond to the search request by displaying the at least one candidate object according to a result of the sorting.

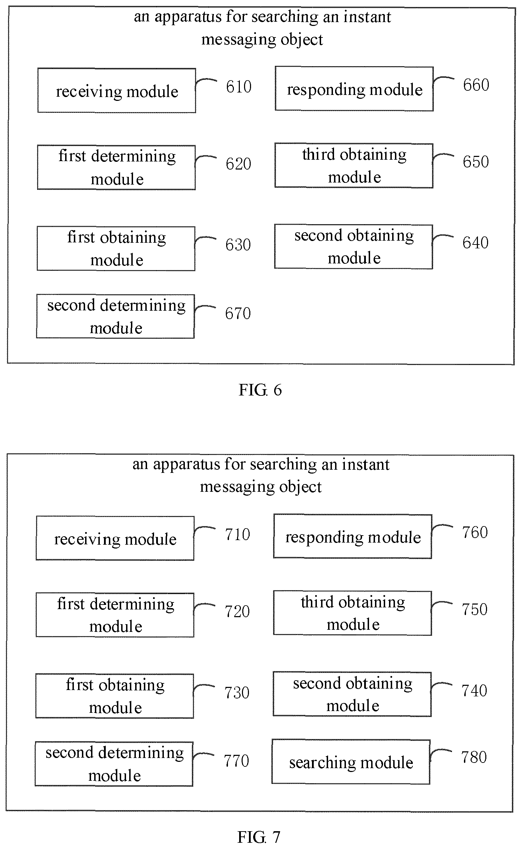

In some embodiments, as illustrated in FIG. 6, the apparatus for searching an instant messaging object may further include a second determining module 670. The second determining module 670 is configured to: establish a relational graph model based on relational data of each object by using each object as an object node; calculate a similarity between the object node of the relational graph model and a target object node, the target object node being a first-hop object node of the object node; and determine the target object node as a close object of the object node in response to the similarity being greater than a preset threshold. The modules 610-660 in FIG. 6 have the same function and structure with the modules 510-560 in FIG. 5.

In some embodiments, as illustrated in FIG. 7, the apparatus for searching an instant messaging object further includes a searching module 780. The searching module 780 is configured to search for the instant messaging object according to the search keyword based on a server-side search engine in the instant messaging system in response to the type of the search request being a second type. The modules 710-770 in FIG. 7 have the same function and structure with the modules 610-670 in FIG. 6.

Regarding the apparatus in the above-mentioned embodiments, the specific manner in which each module performs operations has been described in detail in the embodiments of the method, and will not be described in detail here.

With the apparatus for searching an instant messaging object according to the embodiments of the disclosure, when it is determined that the search request for the first object is of the first type, a retrieval function can be provided based on the client-side search engine, and the client-side search engine itself provides the recall set, which can effectively avoid the problems of poor recall and slowing down the performance caused by a large recall set from the server side, thereby reducing the time consumed by the response and improving the system performance. In addition, the present disclosure can improve the accuracy of search results by sorting each candidate object according to the feature information of the candidate objects, help users to quickly find their search targets, and improve users' search and office efficiency.

According to embodiments of the disclosure, the disclosure further provides an electronic device and a computer-readable storage medium.

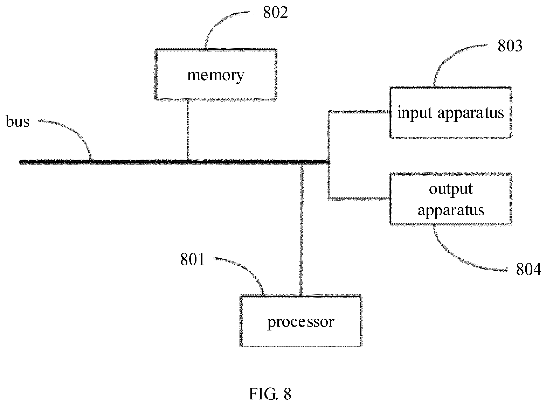

As illustrated in FIG. 8, FIG. 8 is a schematic diagram illustrating an electronic device for implementing a method for searching an instant messaging object according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the electronic device includes one or more processors 801, a memory 802, and an interface for configured to connect various components, including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementations, a plurality of processors and/or a plurality of buses may be configured with a plurality of memories if necessary. Similarly, the processor may connect a plurality of electronic devices, and each device provides a part of necessary operations (for example, as a server array, a group of blade servers, or a multi-processor system). FIG. 8 takes one processor 801 as an example.

A memory 802 is a non-transitory computer-readable storage medium provided in the disclosure. The memory stores instructions executable by the at least one processor, so that the at least one processor executes a method for searching for an instant messaging object as described in the disclosure. The non-transitory computer-readable storage medium of the disclosure stores computer instructions, in which the computer instructions are configured to execute a method for searching for an instant messaging object provided in the disclosure by a computer.

As a non-transitory computer-readable storage medium, the memory 802 may be configured to store non-transitory software programs, non-transitory computer-executable programs and modules, such as program instructions/modules corresponding to a method for searching for an instant messaging object in the embodiment of the disclosure. The processor 801 executes various functional applications and data processing of the server by running a non-transitory software program, an instruction, and a module stored in the memory 802, that is, a method for searching for an instant messaging object in the above method embodiment is implemented.

The memory 802 may include a program storage area and a data storage area; the program storage area may store operation systems and application programs required by at least one function; the data storage area may store data created based on the use of an electronic device for searching for an instant messaging object, etc. In addition, the memory 802 may include a high-speed random access memory, and may also include a non-transitory memory, such as at least one magnetic disk storage device, a flash memory device, or other non-transitory solid-state storage devices. In some embodiments, the memory 802 optionally includes a memory set remotely relative to the processor 801 that may be connected to an electronic device for searching for an instant messaging object via a network. The example of the above networks includes but not limited to an Internet, an enterprise intranet, a local area network, a mobile communication network and their combination.

An electronic device configured to implement a method for searching for an instant messaging object may further includes an input apparatus 803 and an output apparatus 804. The processor 801, the memory 802, the input apparatus 803, and the output apparatus 804 may be connected through a bus or in other ways. FIG 8 takes connection through a bus as an example.

The input apparatus 803 may receive input digital or character information, and generate key signals input related to user setting and function control of an electronic device for searching for an instant messaging object, such as a touch screen, a keypad, a mouse, a track pad, a touch pad, an indicating rod, one or more mouse buttons, a trackball, a joystick and other input apparatuses. The output apparatus 804 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, software, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor ( for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in a cloud computing service system, in order to solve the existing defects of difficult management and weak business expansion in traditional physical hosting and virtual private server (VPS) services. The server can also be a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A method for searching an instant messaging object, comprising:
receiving a search request of a first object, and determining a type of the search request (101; 201; 301; 401);
obtaining at least one recall set of the first object based on a client-side search engine in an instant messaging system in response to the type of the search request being a first type (102; 202; 302; 402);
obtaining at least one candidate object corresponding to a search keyword in the search request based on the search keyword and the at least one recall set (103);
obtaining feature information of each candidate object (104; 206; 306; 406); and
responding to the search request by sorting the at least one candidate object based on the feature information (105; 207).

2. The method according to claim 1, wherein obtaining at least one candidate object corresponding to the search keyword in the search request based on the search keyword and the at least one recall set (103) comprises:
combining the at least one recall set, and obtaining a target recall set by performing de-duplication on objects in the combined at least one recall set (203; 303; 403);
performing match processing on each field of each object in the target recall set based on the search keyword in the search request (204; 304; 404); and
determining the at least one candidate object corresponding to the search keyword from the target recall set according to a result of the match processing (205; 305; 405).

3. The method according to claim 2, wherein performing match processing on each field of each object in the target recall set based on the search keyword in the search request (204; 304; 404) comprises:
performing the match processing on each field of each object in the target recall set based on a plurality of match levels according to the search keyword in the search request.

4. The method according to any of claims 1 to 3, wherein responding to the search request by sorting the at least one candidate object based on the feature information (105; 207) comprises:
determining a prediction score of a click rate of each candidate object based on the feature information (307; 407);
sorting the at least one candidate object according to the prediction score of the click rate of each candidate object (308; 408); and
responding to the search request by displaying the at least one candidate object according to a result of the sorting (309; 409).

5. The method according to any of claims 1 to 4, wherein a source of the recall set comprises at least one of:
an object clicked by the first object in a first time period;
a preset number of objects communicating with the first object in a second time period; and
a close object of the first object in a third time period.

6. The method according to claim 5, wherein the close object is determined by:
establishing a relational graph model based on relational data of each object by using each object as an object node;
calculating a similarity between the object node of the relational graph model and a target object node, wherein the target object node is a first-hop object node of the object node; and
determining the target object node as a close object of the object node in response to the similarity being greater than a preset threshold.

7. The method according to any of claims 1 to 6, further comprising:
searching for the instant messaging object according to the search keyword based on a server-side search engine in the instant messaging system in response to the type of the search request being a second type (410).

8. An apparatus for searching an instant messaging object, comprising:
a receiving module (510; 610; 710), configured to receive a search request of a first object;
a first determining module (520; 620; 720), configured to determine a type of the search request;
a first obtaining module (530; 630; 730), configured to obtain at least one recall set of the first object based on a client-side search engine in an instant messaging system in response to the type of the search request being a first type;
a second obtaining module (540; 640; 740), configured to obtain at least one candidate object corresponding to a search keyword in the search request based on the search keyword and the at least one recall set;
a third obtaining module (550; 650; 750), configured to obtain feature information of each candidate object; and
a responding module (560; 660; 760), configured to respond to the search request by sorting the at least one candidate object based on the feature information.

9. The apparatus according to claim 8, wherein the second obtaining module (540; 640; 740) is configured to:
combine the at least one recall set, and obtain a target recall set by performing de-duplication on objects in the combined at least one recall set;
perform match processing on each field of each object in the target recall set based on the search keyword in the search request; and
determine the at least one candidate object corresponding to the search keyword from the target recall set according to a result of the match processing.

10. The apparatus method according to claim 9, wherein the second obtaining module (540; 640; 740) is configured to:
perform the match processing on each field of each object in the target recall set based on a plurality of match levels according to the search keyword in the search request.

11. The apparatus according to claim 8, wherein the responding module (560; 660; 760) is configured to:
determine a prediction score of a click rate of each candidate object based on the feature information;
sort the at least one candidate object according to the prediction score of the click rate of each candidate object; and
respond to the search request by displaying the at least one candidate object according to a result of the sorting.

12. The apparatus according to claim 9, wherein a source of the recall set comprises at least one of:
an object clicked by the first object in a first time period;
a preset number of objects communicating with the first object in a second time period; and
a close object of the first object in a third time period.

13. The apparatus according to claim 12, wherein further comprising a second determining module (670; 770), configured to:
establish a relational graph model based on relational data of each object by using each object as an object node;
calculate a similarity between the object node of the relational graph model and a target object node, wherein the target object node is a first-hop object node of the object node; and
determine the target object node as a close object of the object node in response to the similarity being greater than a preset threshold.

14. A non-transitory computer-readable storage medium storing computer instructions, wherein the computer instructions are configured to cause a computer to implement the method according to any of claims 1-7.

15. A computer program product, comprising computer instructions, wherein, when the instructions are executed by a processor, the method according to any of claims 1-7 is implemented.
